# EUROPEAN PATENT APPLICATION

(11) **EP 4 428 421 A1**
(43) Date of publication of application: **11.09.2024**
(21) Application number: 22889721.1
(22) Date of filing: 06.10.2022
(51) Int. Cl.: F16L 11/127, B32B 1/08, B32B 25/10, F16L 11/08

(54) **FLUID-CONVEYING HOSE**

(30) Priority: 02.11.2021 JP 2021179733
(71) Applicant: The Yokohama Rubber Co., Ltd., Hiratsuka-shi, Kanagawa 254-8601 (JP)
(72) Inventor: TAMADA Yoshinori, Hiratsuka-shi, Kanagawa 254-8601 (JP); FUSE Noriyuki, Hiratsuka-shi, Kanagawa 254-8601 (JP)
(74) Representative: Grünecker Patent- und Rechtsanwälte PartG mbB
(86) International application number: PCT/JP2022/037429
(87) International publication number: WO 2023/079897

(57) **Abstract**

To provide a fluid-transporting hose that allows maintaining an electrical resistance value between both the end portions of the hose at the time of transferring a fluid between a ship and a ship in an appropriate predetermined range for a long period of time. Connection fittings (2) are fixed to both the end portions of a hose body (3) formed by stacking an inner surface rubber layer (4), a reinforcing layer (6), and an outer surface rubber layer (5) in order. The reinforcing layer (6) is constituted of a multilayer structure of a reinforcing fiber layer (6a) and an intermediate rubber layer (6b). Among rubbers forming the inner surface rubber layer (4), the outer surface rubber layer (5), and the intermediate rubber layer (6b), an electrically conductive rubber (7) having a smallest electrical resistance value per unit cross-sectional area and unit length is helically extended at an interval d in a longitudinal direction of the hose. The electrical resistance value between both the end portions of the hose measured in accordance with a stipulation of ISO8031 in a state in which the hose body (3) extends straight with a hose (1) in a new condition is 100000 S2 or more and 600000 S2 or less.

## Description

### Technical Field

The present invention relates to a fluid-transporting hose and particularly relates to a fluid-transporting hose used for transferring a fluid between a ship and a ship.

### Background Art

A marine hose is used to transport crude oil or the like by connecting a tanker or the like on the sea and an onshore facility or the like (for example, see Patent Document 1). Although a use situation is different from that of the marine hose, when a fluid is transferred between a ship and a ship, a large-diameter fluid-transporting hose, such as a marine hose, is used and a hose line is formed so as to be extended between the ships.

This hose line is required to have a function of preventing arc discharge caused by a stray current generated by a potential difference between the ship and the ship. In addition, a function of preventing spark caused by electrification current generated by friction between the transported fluid and a wall surface of a hose flow path is also required. To prevent the arc discharge, it is necessary to increase an electrical resistance value of the hose line (transporting hose) to some extent to block the stray current. On the other hand, to prevent spark, it is necessary to reduce the electrical resistance value to some extent such that the electrification current is easily discharged. Therefore, the electrical resistance value of the hose line needs to be maintained within an appropriate predetermined range to prevent both the arc discharge and the spark. Moreover, it is known that an electrical resistance value of vulcanized rubber forming the fluid-transporting hose changes (decreases) over time. Therefore, unlike a marine hose in which a steel cord (metal wire) is used in a reinforcing layer, in a fluid-transporting hose in which a metal wire is not used, it is necessary to more accurately maintain the electrical resistance value between both end portions of the fluid-transporting hose in an appropriate predetermined range at the time of manufacturing the hose in consideration of the change over time.

Further, the hose line is used in a bent state, and the electrical resistance value of the transporting hose changes depending on a degree of bending deformation. That is, the electrical resistance value between both the end portions of the hose becomes larger in the bent state than the transporting hose in a straight state. Therefore, there is room for improvement in maintaining the electrical resistance value between both the end portions of the hose at the time of transferring a fluid between a ship and a ship in an appropriate predetermined range for a long period of time.

### Citation List

### Patent Literature

Patent Document 1: JP 2017-137957 A

### Summary of Invention

### Technical Problem

An object of the present invention is to provide a fluid-transporting hose that allows maintaining an electrical resistance value between both end portions of the hose at the time of transferring a fluid between a ship and a ship in an appropriate predetermined range for a long period of time.

### Solution to Problem

To achieve the object described above, a fluid-transporting hose of an embodiment of the present invention may include a hose body and connection fittings. The connection fittings may be fixed to both end portions of the hose body. The hose body may be formed by stacking an inner surface rubber layer, a reinforcing layer, and an outer surface rubber layer in order. The reinforcing layer may be a multilayer structure of a reinforcing fiber layer and an intermediate rubber layer. Among rubbers forming the inner surface rubber layer, the outer surface rubber layer, and the intermediate rubber layer, an electrically conductive rubber having a smallest electrical resistance value per unit cross-sectional area and unit length may helically extend at an interval in a longitudinal direction of the hose.

### Advantageous Effects of Invention

According to an embodiment of the present invention, among the rubbers constituting the hose body, the electrically conductive rubber having the smallest electrical resistance value per the unit cross-sectional area and the unit length helically extends at the intervals in the longitudinal direction of the hose. The electrical resistance value between both the end portions of the hose can be increased by helically extending the electrically conductive rubber as described above and guiding electricity flowing through the hose body to the electrically conductive rubber having a further long entire length. By appropriately setting the form of the electrically conductive rubber, the electrical resistance value between both the end portions of the hose can be easily maintained in an appropriate predetermined range.

In addition, even when the hose body is bent, excessive deformation is less likely to occur in the electrically conductive rubber helically extending as described above. Accordingly, it is advantageous to suppress fluctuation of the electrical resistance value between both the end portions of the hose when the hose is used. Therefore, by using the fluid-transporting hose of an embodiment of the present invention, it is advantageous to maintain the electrical resistance value between both the end portions of the hose at the time of transferring a fluid between a ship and a ship in the appropriate predetermined range for a long period of time.

### Brief Description of Drawings

FIG. 1 is an explanatory diagram exemplifying a use state of a fluid-transporting hose according to an embodiment of the present invention.
FIG. 2 is an explanatory diagram exemplifying the fluid-transporting hose according to an embodiment of the present invention in a straight state in a side view.
FIG. 3 is an explanatory diagram exemplifying one end portion of the fluid-transporting hose of FIG. 2 in a longitudinal cross-sectional view.
FIG. 4 is a cross-sectional view taken along A-A of FIG. 3.
FIG. 5 is an explanatory diagram exemplifying an enlarged part of FIG. 3.
FIG. 6 is an explanatory diagram schematically exemplifying a modified example of spiral pitches of an electrically conductive rubber.
FIG. 7 is an explanatory view schematically exemplifying another modified example of the spiral pitches of the electrically conductive rubber.

### Description of Embodiments

A fluid-transporting hose of the present invention will be described below based on embodiments illustrated in the drawings.

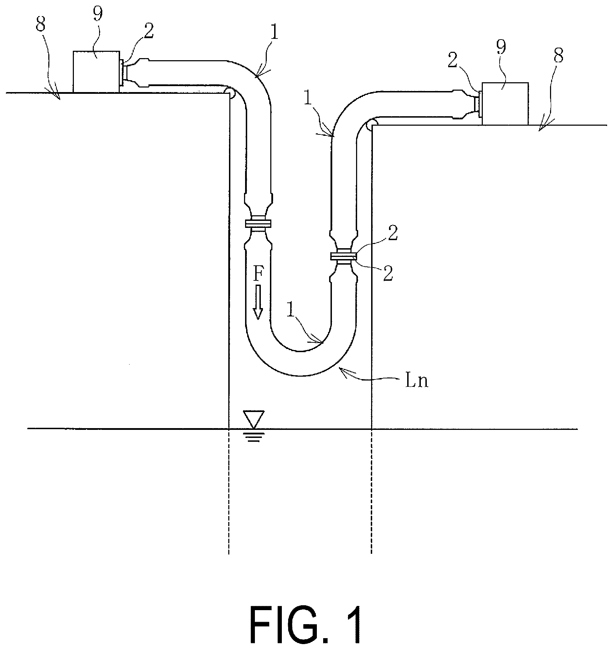

As exemplified in FIG. 1, a fluid-transporting hose 1 (hereinafter referred to as a hose 1) of an embodiment of the present invention is used in a hose line Ln extended between a ship 8 and a ship 8. In this embodiment, the hose line Ln is formed by connecting a plurality of the hoses 1, but the hose line Ln may be formed by the single hose 1. Both end portions of the hose line Ln are detachably connected to hose fixing portions 9 of the respective ships 8. A fluid F is transferred from one ship 8 to the other ship 8 through the hose line Ln. Examples of the fluid F include any various fluids F including crude oil, gasoline, and LPG, and can be transferred through the hose line Ln.

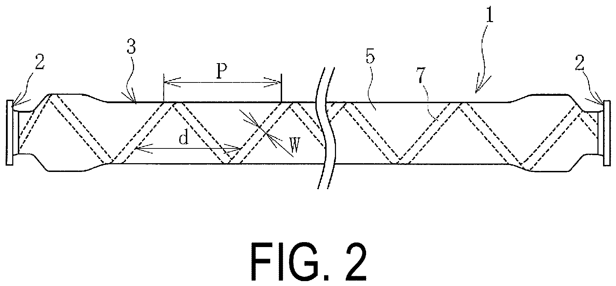

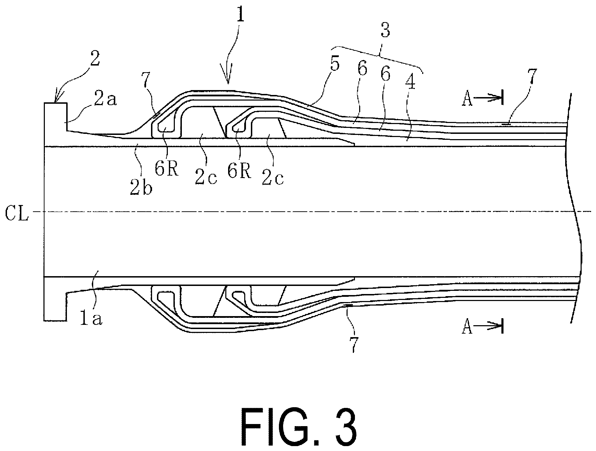

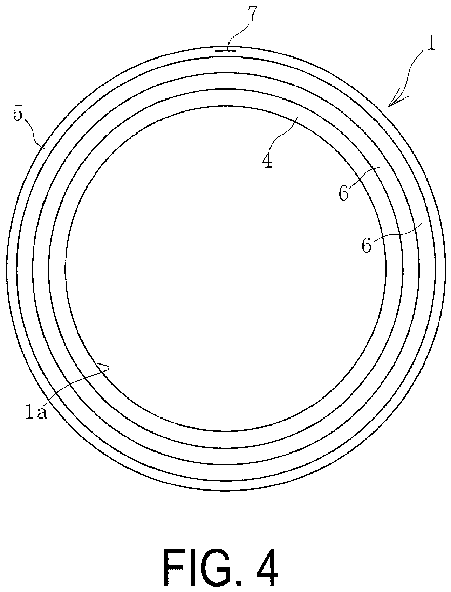

As exemplified in FIGS. 2 to 4, the hose 1 includes a hose body 3 and respective connection fittings 2 connected to both the end portions of the hose body 3 in a longitudinal direction. That is, the hose body 3 extends between the respective connection fittings 2. A flow path 1a communicates with the hose body 3 and each of the connection fittings 2 in the longitudinal direction. The length of one hose 1 is 9.1 m or more and 11.8 m or less, for example, and an inner diameter (flow path diameter) of the hose body 3 is 200 mm or more and 300 mm or less, for example. A dot-dash line CL in the drawing is a center axis line extending in the longitudinal direction of the hose 1.

The connection fitting 2 has a disc-shaped flange 2a and a cylindrical nipple 2b joined to the flange 2a and having a leading edge portion side inserted into the hose body 3. On an outer circumferential surface of the nipple 2b, fixing rings 2c are disposed to project at intervals in the longitudinal direction.

The hose body 3 includes an inner surface rubber layer 4, an outer surface rubber layer 5, a reinforcing layer group (reinforcing layers 6) disposed between the inner surface rubber layer 4 and the outer surface rubber layer 5, and a band-like electrically conductive rubber 7. The inner surface rubber layer 4, the reinforcing layer group (reinforcing layers 6), and the outer surface rubber layer 5 are coaxially layered in this order. The electrically conductive rubber 7 helically extends at an interval d in the longitudinal direction of the hose on an outer circumferential side of the flow path 1a. The interval d is an interval between adjacent spirals of the electrically conductive rubber 7. A length indicated by a sign P described in FIG. 2 is a distance in the longitudinal direction (hereinafter referred to as a spiral pitch P) of the hose when the electrically conductive rubber 7 helically extends one round in the hose body 3. Even when the spiral pitch P is the same, as a width dimension W of the electrically conductive rubber 7 increases, the interval d decreases. The hose body 3 may be provided with another necessary member as appropriate.

Since the inner surface rubber layer 4 comes into contact with the fluid F transferred through the hose line Ln, a rubber having appropriate characteristics is employed according to the type of the fluid F. The inner surface rubber layer 4 when crude oil or the like is transported is made of, for example, acrylonitrile rubber having excellent oil resistance. The layer thickness of the inner surface rubber layer 4 is, for example, 4 mm or more and 6 mm or less. A lining layer made of, for example, nylon fiber is coaxially embedded in the inner surface rubber layer 4.

For the outer surface rubber layer 5, a rubber having appropriate characteristics is employed in consideration of wear resistance and the like. The outer surface rubber layer 5 is made of, for example, chloroprene rubber or the like. The layer thickness of the outer surface rubber layer 5 is, for example, 6 mm or more and 10 mm or less. A lining layer made of, for example, nylon fiber is coaxially embedded in the outer surface rubber layer 5.

In this embodiment, the reinforcing layer group is configured to by the inner reinforcing layer 6 and the outer reinforcing layer 6. The reinforcing layer group can be configured by stacking a single or the appropriate number of reinforcing layers 6. The reinforcing layer group is made of non-metal in which a metal wire, such as a steel cord, is not used. However, a metallic member (wire) is used only for bead rings 6R disposed at both the end portions of the respective reinforcing layers 6 in the longitudinal direction. The bead rings 6R of the respective reinforcing layers 6 are engaged with the corresponding fixing rings 2c such that the respective reinforcing layers 6 are fixed to the connection fittings 2.

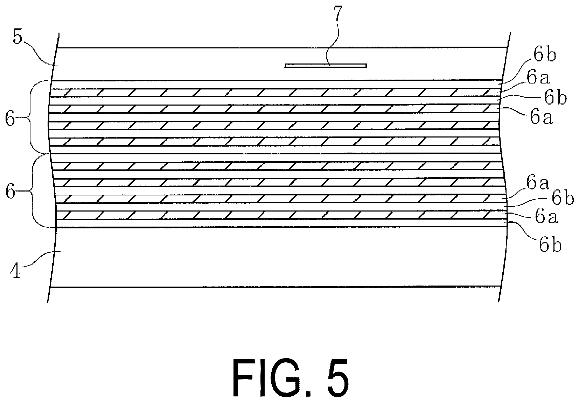

As exemplified in FIG. 5, each of the reinforcing layers 6 is a multilayer structure of reinforcing fiber layers 6a and intermediate rubber layers 6b. Basically, both upper and lower surfaces of the reinforcing fiber layer 6a are covered with the intermediate rubber layers 6b. The numbers of the reinforcing fiber layers 6a and the intermediate rubber layers 6b constituting each of the reinforcing layer 6 are appropriately determined.

The reinforcing fiber layer 6a is formed by the large number of fiber cords. As the material of the fiber cord, the various known resins can be used, and, for example, polyester or the like is used. The layer thickness of one layer of each of the reinforcing fiber layers 6a is, for example, 0.7 mm or more and 1.0 mm or less. The reinforcing fiber layer 6a has a considerably larger electrical resistance value than rubber and can be regarded as an insulating material in an embodiment of the present invention. The connection fitting 2 is a good conductor.

The intermediate rubber layer 6b is a rubber having an excellent adhesive strength, and firmly joins members layered adjacent to one another. Various known adhesive rubbers can be used for the intermediate rubber layer 6b. The layer thickness of one layer of each of the intermediate rubber layers 6b is, for example, 0.3 mm or more and 0.5 mm or less.

The hose 1 has a special specification in which the band-like electrically conductive rubber 7 is helically extended at intervals in the longitudinal direction of the hose. The electrically conductive rubber 7 is a rubber having the smallest electrical resistance value per unit cross-sectional area and unit length among the rubbers forming the inner surface rubber layer 4, the outer surface rubber layer 5, and the intermediate rubber layers 6b. Therefore, the electrically conductive rubber 7 is made of rubber through which electricity flows most easily in the hose body 3 and is a member through which electricity flows most easily in the hose body 3. The electrically conductive rubber 7 is formed by compounding conductive carbon or the like with a blend of natural rubber and styrene-butadiene rubber, for example.

In this embodiment, one band-like electrically conductive rubber 7 is disposed in the outer surface rubber layer 5 but can be disposed in the inner surface rubber layer 4 or in the intermediate rubber layer 6b. That is, the electrically conductive rubber 7 can be constituted by the rubber forming the inner surface rubber layer 4, the outer surface rubber layer 5, or the intermediate rubber layer 6b. In this embodiment, the electrically conductive rubber 7 is embedded in the outer surface rubber layer 5 but can be exposed on an outer surface of the outer surface rubber layer 5 or can be disposed on a boundary surface between the outer surface rubber layer 5 and the reinforcing layer 6.

To protect the electrically conductive rubber 7 from external damage, it is preferable that the electrically conductive rubber 7 is embedded in the outer surface rubber layer 5, disposed on the boundary surface between the outer surface rubber layer 5 and the reinforcing layer 6, or disposed on the intermediate rubber layer 6b. When the electrically conductive rubber 7 is embedded in the inner surface rubber layer 4, it is easily affected by the fluid F flowing through the flow path 1a.

The electrically conductive rubber 7 extends substantially over the entire length of the hose body 3. It is preferable that respective both the end portions of the electrically conductive rubber 7 in the longitudinal direction directly abut on the connection fittings 2 at both the end portions of the hose 1. Even when the electrically conductive rubber 7 and the connection fittings 2 do not directly abut on, a good conductor is disposed between them to have a specification of smoothly conducting electricity.

Therefore, the electrical resistance value between the connection fitting 2 at one end portion and the connection fitting 2 at the other end portion of the hose 1 (between both the end portions of the hose) greatly depends on the electrical resistance value of the entire length of the electrically conductive rubber 7. An electrical resistance value R (S2) of the entire length of the electrically conductive rubber 7 is calculated by R = ρ × L/S based on a cross-sectional area S (m²), a resistivity (Ω•m), and an entire length L (m) of the electrically conductive rubber 7. The resistivity ρ is a fixed value determined by the type of rubber. That is, as the cross-sectional area S of the electrically conductive rubber 7 is made smaller and as the entire length L is made longer, the electrical resistance value R becomes large, and as the cross-sectional area S is made larger and as the entire length L is made shorter, the electrical resistance value R becomes small.

Since the electrically conductive rubber 7 helically extends at the interval d in the longitudinal direction of the hose, its entire length can be made substantially longer than the entire length of the hose. In addition, the cross-sectional area S can be arbitrarily set. Therefore, the electrical resistance value R of the entire length of the electrically conductive rubber 7 can be set in a desired range, and accordingly, the electrical resistance value between both the end portions of the hose is easily set in an appropriate predetermined range (standard range).

Regarding a change in an electrical resistance value of vulcanized rubber over time, for example, when about one year elapses from the time of manufacturing, the electrical resistance value becomes, for example, about 25% or more and 50% or less of the value at the time of manufacturing, and thereafter, the change in the electrical resistance value gradually becomes small. Therefore, in consideration of such a change over time, the forms (cross-sectional area S, entire length L) of the electrically conductive rubber 7 are appropriately set to determine the electrical resistance value R of the entire length of the electrically conductive rubber 7 in a new condition. This makes it easy to maintain the electrical resistance value between both the end portions of the hose in the appropriate predetermined range (standard range) for a long period of time.

When the hose 1 (hose body 3) is bent, the electrically conductive rubber 7 deforms and the electrical resistance value R fluctuates. For example, when the hose body 3 is in a state of being bent by about 180°, the electrical resistance value R becomes about 150% or more and 200% or less as compared with a state of not being bent (straight state). In the hose 1, even when the hose body 3 bends, the helically extended electrically conductive rubber 7 is less likely to deform excessively. Accordingly, when the hose 1 is used, it is advantageous to suppress the fluctuation of the electrical resistance value between both the end portions of the hose.

As exemplified in FIG. 1, the connection fittings 2 at both the end portions of the hose line Ln are connected to the hose fixing portions 9 provided in the corresponding ships 8. As a result, the hose line Ln hangs down between the ships 8, and the hose 1 is bent. The hose line Ln is extended between the ships 8 at a position above a water surface. Since each of the ships 8 swings due to waves, wind, tidal current, and the like, the hose line Ln also swings accordingly, and a degree of bending of the hose line Ln (hose 1) fluctuates.

Even under such a use condition of the hose 1, since the electrically conductive rubber 7 helically extends at the interval d in the longitudinal direction of the hose, the fluctuation of the electrical resistance value R during use of the hose 1 is suppressed. As a result, the electrical resistance value between both the end portions of the hose when the fluid F is transferred between the ship 8 and the ship 8 is easily maintained in the appropriate predetermined range (standard range).

In the hose line Ln formed between the ship 8 and the ship 8, it is necessary to prevent an arc discharge caused by a stray current generated by a potential difference between the ship 8 and the ship 8 and to prevent a spark caused by an electrification current generated by friction between the transported fluid F and a wall surface of a hose flow path. Therefore, it is effective to maintain the electrical resistance value of the entire length of the hose (between both the end portions of the hose) in a standard range of, for example, 25000 S2 or more and 1000000 S2 or less for a long period of time.

Therefore, the electrical resistance value of the entire length of the hose in a new condition is determined in consideration of the above-described secular change of the electrical resistance value of the vulcanized rubber and fluctuation of the electrical resistance value due to the bending of the hose 1 during use. To be specific, the electrical resistance value of the entire length of the hose measured in accordance with a stipulation of ISO8031 in a state where the hose body 3 is extended straight with the hose 1 in a new condition is preferably set to 100000 S2 or more and 600000 S2 or less. "The hose 1 in a new condition" refers to a period from the manufacture of the hose 1 until, for example, 30 days have elapsed. Therefore, the electrical resistance value of the entire length of the hose at the time of shipment inspection is set to 100000 S2 or more and 600000 S2 or less. Thereby, the electrical resistance value of the entire length of the hose can be maintained in the standard range of 25000 S2 or more and 1000000 S2 or less for a long period of time.

Therefore, the cross-sectional area S and the entire length L of the electrically conductive rubber 7 only need to be set such that the electrical resistance value of the entire length of the hose becomes 100000 S2 or more and 600000 S2 or less with the hose 1 in a new condition. Regarding the cross-sectional area S, a degree of freedom of the layer thickness of the electrically conductive rubber 7 is low, for example, about 1.0 mm or more and 3.0 mm or less. The cross-sectional shape of the electrically conductive rubber 7 is not particularly limited but is substantially rectangular because there is no degree of freedom of the layer thickness. Therefore, the width dimension W is easily adjusted for the cross-sectional area S. When the width dimension W of the electrically conductive rubber 7 is too small, it is easily broken, and therefore the width dimension W is set to, for example, 10 mm or more. When the width dimension W of the electrically conductive rubber 7 is excessively large, the interval d between the adjacent spirals becomes excessively small, and current is easily conducted through the interval d. Therefore, the width dimension W of the electrically conductive rubber 7 is set to, for example, 50% or less of the spiral pitch P.

The entire length L of the electrically conductive rubber 7 can be adjusted by changing the spiral pitch P. Therefore, the spiral pitch P only needs to be set such that the degree of freedom of the entire length L becomes relatively high and the desired entire length L is obtained.

As described above, in the hose 1, the electrical resistance value between both the end portions of the hose can be increased by guiding the electricity flowing through the hose body 3 to the electrically conductive rubber 7 that is helically extended and has the further long entire length L. By appropriately setting the form of the electrically conductive rubber 7, the electrical resistance value between both the end portions of the hose is easily maintained in the appropriate predetermined range (standard range) for a long period of time.

When the electrical resistance value per unit cross-sectional area and unit length of the rubber disposed adjacent to the electrically conductive rubber 7 is close to that of the electrically conductive rubber 7, the current easily flows not only through the electrically conductive rubber 7 but also through the rubber disposed adjacent to the electrically conductive rubber 7. As a result, it becomes difficult to maintain the electrical resistance value between both the end portions of the hose in the predetermined range (standard range).

Therefore, it is desirable that the electrical resistance value per unit cross-sectional area and unit length of the rubber disposed adjacent to the electrically conductive rubber 7 is made as large as possible to obtain an insulation specification. For example, the electrical resistance value per unit cross-sectional area and unit length of the rubber disposed adjacent to the electrically conductive rubber 7 is set to 5 times or more and more preferably 10 times or more the electrical resistance value per unit cross-sectional area and unit length of the electrically conductive rubber 7. The entire surface of the electrically conductive rubber 7 may be covered with a rubber having the insulation specification. In this embodiment, the outer surface rubber layer 5 is configured by a rubber having the insulation specification and the electrically conductive rubber 7 embedded in the rubber having the insulation specification.

In the above-described embodiment, the spiral pitch P of the electrically conductive rubber 7 is set to be constant over the entire length of the hose. The hose 1 in use is in a bent state, and the hose body 3 has a bent range and a substantially non-bent range (straight range). The electrical resistance value significantly fluctuates in the bending range.

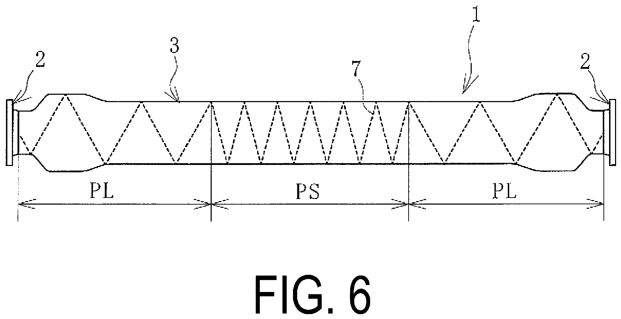

When the spiral pitch P of the electrically conductive rubber 7 is made further small and the electrically conductive rubber 7 is densely wound, the degree of bending of the electrically conductive rubber 7 is alleviated even when the hose body 3 is bent as compared with the case where the spiral pitch P is large and the electrically conductive rubber 7 is sparsely wound. Accordingly, the fluctuation of the electrical resistance value can be suppressed. Therefore, as exemplified in FIG. 6, the spiral pitch P of the electrically conductive rubber 7 can be changed in the longitudinal direction of the hose.

In FIG. 6, the spiral pitch P is divided into relatively long ranges PL and a relatively short range PS. The relatively short range PS is set at a central portion of the hose 1 in the longitudinal direction (for example, a range of 40% of the entire length of the hose body 3 with the longitudinal center position as the center) bent in a state where a radius of curvature is the smallest in the hose body 3 when the hose 1 is used. The relatively long ranges PL of the spiral pitches P are set at both the end portions of the hose 1 in the longitudinal direction. The specification exemplified in FIG. 6 is advantageous in suppressing the fluctuation of the electrical resistance value between both the end portions of the hose while the hose 1 is used.

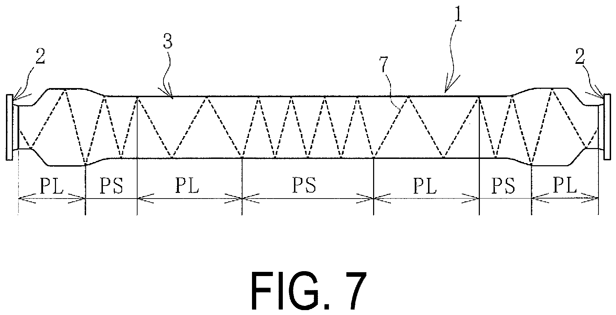

As exemplified in FIG. 7, the spiral pitch P of the electrically conductive rubber 7 can be changed in the longitudinal direction of the hose. In FIG. 7, the ranges PS in which the spiral pitch P is relatively short are set at positions equivalent to the vicinity of the end positions of the nipples 2b of the connection fittings 2 in addition to the central portion of the hose 1 in the longitudinal direction. Ranges other than the relatively short range PS are set as the relatively long ranges PL. Since the vicinity of the end position of the nipple 2b of the connection fitting 2 is a boundary range between a region where the hard metal nipple 2b exists and a region where the hard metal nipple 2b does not exist, bending with a small radius of curvature is likely to locally occur in the hose body 3 when the hose 1 is used. Therefore, the specification exemplified in FIG. 7 is advantageous in suppressing the fluctuation of the electrical resistance value between both the end portions of the hose while the hose 1 is used.

### Example

As shown in Table 1, a hose sample (Example) having the same structure as exemplified in FIGS. 2 to 5 and a hose sample (Comparative Example) different from Example only in a form of an electrically conductive rubber were manufactured, and electrical resistance values of entire lengths of the hoses of the respective samples were measured in accordance with the stipulation of ISO8031. The results are shown in Table 1. The only difference between Example and Comparative Example is a spiral pitch of the electrically conductive rubber, and in Comparative Example, the adjacent spirals of the electrically conductive rubber were overlapped with one another to set the interval d to 0. The electrically conductive rubber of each sample had the width dimension W of 50 mm and a layer thickness of 1.5 mm. In each of the samples, the spiral pitch was constant over the entire length of the hose. "Bent state in new condition" in Table 1 means that measurement was performed in a state in which each of the samples was bent at about 180° with a central portion in a longitudinal direction as a bend point in a new condition. In addition, "Straight state after elapse of one year" means that a sample stored for one year in an unused state after manufacturing the sample was measured with the hose body in a straight state.

**Table 1**

| | | Example | Comparative Example |
|---|---|---|---|
| Interval d between adjacent spirals of electrically conductive rubber (mm) | | 95 | 0 |
| Electrical resistance value (kΩ) | Straight state in new condition | 468 | 69 |
| | Bent state in new condition | 911 | 117 |
| | Straight state after elapse of one year | 180 | 23 |

From the results of Table 1, it can be seen that in Example in which the electrical resistance value measured in the straight state in the new condition was 468000 Ω, the electrical resistance value of the entire length of the hose can be maintained in the standard range of 25000 S2 or more and 1000000 S2 or less even in the bent state in the new condition and in the straight state after elapse of one year from the manufacture.

### Reference Signs List

1 Fluid-transporting hose
1a Flow path
2 Connection fitting
2a Flange
2b Nipple
2c Fixing ring
3 Hose body
4 Inner surface rubber layer
5 Outer surface rubber layer
6 Reinforcing layer
6R Bead ring
6a Reinforcing fiber layer
6b Intermediate rubber layer
7 Electrically conductive rubber
8 Ship
9 Hose fixing portion
Ln Hose line
F Fluid

## Claims

1. A fluid-transporting hose, comprising:
a hose body; and
connection fittings fixed to both end portions of the hose body,
the hose body being formed by stacking an inner surface rubber layer, a reinforcing layer, and an outer surface rubber layer in order, the reinforcing layer being a multilayer structure of a reinforcing fiber layer and an intermediate rubber layer, and
among rubbers forming the inner surface rubber layer, the outer surface rubber layer, and the intermediate rubber layer, an electrically conductive rubber having a smallest electrical resistance value per unit cross-sectional area and unit length helically extending at an interval in a longitudinal direction of the hose.

2. The fluid-transporting hose according to claim 1, wherein an electrical resistance value per unit cross-sectional area and unit length of a rubber disposed adjacent to the electrically conductive rubber is five times or more the electrical resistance value per the unit cross-sectional area and the unit length of the electrically conductive rubber.

3. The fluid-transporting hose according to claim 1 or 2, wherein the electrically conductive rubber is a rubber forming the outer surface rubber layer.

4. The fluid-transporting hose according to claim 1 or 2, wherein the electrically conductive rubber is a rubber forming the intermediate rubber layer.

5. The fluid-transporting hose according to any one of claims 1 to 4, wherein an electrical resistance value of an entire length of the hose measured in accordance with a stipulation of ISO8031 in a state in which the hose body extends straight in a new condition is 100000 S2 or more and 600000 S2 or less.
